# EUROPEAN PATENT APPLICATION

(11) **EP 2 596 760 A1**
(43) Date of publication of application: **29.05.2013**
(21) Application number: 12193787.4
(22) Date of filing: 22.11.2012
(51) Int. Cl.: A61C 1/18, A61C 1/02, A61C 1/06, A61C 1/07

(54) **Dental handpiece**

(30) Priority: 24.11.2011 JP 2011255827
(71) Applicant: Nakanishi Inc., Tochigi-ken 322-8666 (JP)
(72) Inventor: AIDA, Tetsuya, Tochigi, Tochigi 322-8666 (JP); SHIBATA, Yuichi, Tochigi, 322-8666 (JP)
(74) Representative: Heyer, Volker

(57) **Abstract**

A dental handpiece having a reciprocal rotation means for converting a rotary motion to a reciprocating rotating motion is disclosed. The reciprocal rotation means includes a rotary body having input- and output-side guide grooves, input- and output-side semispherical concave surface formed at the ends of input- and output-side shaft part, respectively, of a rotary shaft extending in a grip of the handpiece, and input- and output-side guide pin protruding from the input- and output-side semispherical concave surface, respectively for engagement in the input- and output-side guide grooves, respectively.

## Description

### FIELD OF ART

The present invention relates to a dental handpiece, in particular, a dental handpiece which gives a reciprocating rotating motion to a cutting tool.

### BACKGROUND ART

In dental root canal therapy, cutting tools such as files and reamers are generally used to enlarge a root canal into a gradually tapered cone by inserting the blade of a tool into a root canal with push and pull strokes or rotation of the tool. In use, some of such cutting tools are directly grasped in a hand, and some others are attached to a dental handpiece. This type of dental handpiece is disclosed, for example, in JP-2002-35010-A1.

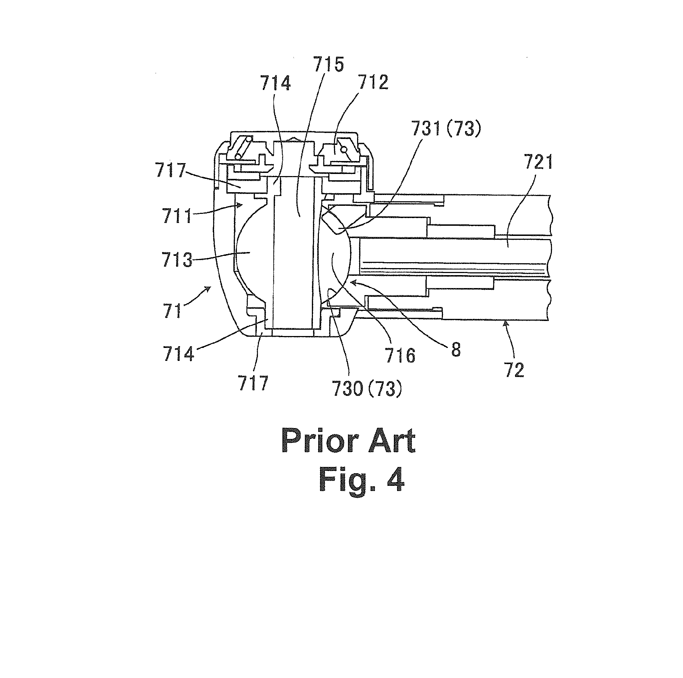

An example of this type of conventional dental handpiece which gives reciprocating rotating motion to a cutting tool is shown in Fig. 4. This dental handpiece has a reciprocal rotation mechanism in its head, where the cutting tool is attached. Many of commercially available handpieces are of this type.

Referring to Fig. 4, the handpiece has head 71 which is of generally a cylindrical shape and has rotation mechanism 711 for rotatably holding a cutting tool therein, neck 72 which extends from the head 71 generally in a cylindrical shape and has first rotary shaft 721 extending therein, and a grip (not shown) which is of generally a cylindrical shape and has a second rotary shaft (not shown) extending therein. One end of the second drive shaft is operatively linked to a rotary drive unit (not shown), while the other end is operatively linked to one end of the first rotary shaft 721 via power transmission means, so that the second rotary shaft acts as a driving rotary shaft and the first rotary shaft 721 acts as a driven rotary shaft. The other end of the first rotary shaft 721 is operatively linked to the rotation mechanism 711 in the head 71 via power transmission means 73, and reciprocal rotation mechanism 8 is established between the rotation mechanism 711 and the power transmission means 73.

The rotation mechanism 711 in the head 71 is composed of generally spherical rotary body 713 and chuck 712. The rotary body 713 has upper and lower rotary shafts 714, 714 extending therefrom to form a vertical axis of rotation, and through hole 715 extending through the upper rotary shaft 714, the rotary body 713, and the lower rotary shaft 714, for receiving and holding a cutting tool therein. The rotary body 713 also has guide groove 716 extending in the surface of the rotary body 713 in the form of a vertical arc between the upper and lower rotary shafts 714, 714. The rotary body 713 is disposed in the head 71 with the upper and lower rotary shafts 714, 714 supported by bearings 717, 717, and rotatable around the vertical axis. A cutting tool is inserted into the through hole 715 and fixed in the rotary body 713 with the chuck 712 so as to be rotatable in the head 71.

The power transmission means 73 is provided integrally at one end of the first rotary shaft 721, and includes semispherical concave surface 730 which is engageable with the proximal semispherical surface of the rotary body 713, and guide pin 731 protruding from the semispherical concave surface 730 at an eccentric position and extending toward the center of the rotary body 713, when assembled, at an angle with respect to the rotary axis of the first rotary shaft 721. The guide pin 731 engages in the guide groove 716 of the rotary body 713.

With the semispherical concave surface 730 on the side of the first rotary shaft 721 engaging the surface of the rotary body 713 arranged in the head 71, and the guide pin 731 on the semispherical concave surface 730 engaging in the guide groove 716 in the rotary body 713, the reciprocal rotation mechanism 8 is established in the head 71 for converting the rotating motion of the rotary shaft 721 driven by the rotary drive unit into a reciprocating rotating motion and transmitting the latter motion to the rotation mechanism 711 and thus to the cutting tool.

The reciprocal rotation mechanism 8 of the conventional dental handpiece, however, has drawbacks. Due to the generally spherical shape of the rotary body 713, the depth of the guide groove 716 provided as a vertical arc in the spherical surface is limited by the vertical through hole 715. In particular, the portions of the guide groove 716 near the rotary shafts 714, 714 cannot be given a sufficient depth for the guide pin 731 to engage in, and thus the range of the guide groove 716 over which the guide pin 731 can engage is naturally limited. This poses limitation on the angle of the guide pin 731, so that the turning angle of the cutting tool in the reciprocating rotating motion is about 80° at most, and cannot be made larger.

With a small turning angle of the cutting tool, in dental root canal therapy, for example, working efficiency in root canal enlargement is low and the time required for cutting work is long. Thus, it is desirable to increase the turning angle of a cutting tool as much as practicable considering the performance of the tool.

### SUMMARY OF THE INVENTION

The present invention aims to solve the problems of the prior art. It is therefore an object of the present invention to provide a dental handpiece having a reciprocal rotation mechanism of this type in which the turning angle of a cutting tool is increased as much as practicable, for example, to about 100° to 135°, to improve the working efficiency with a cutting tool in dental therapy and to shorten the time required for cutting work, and in which the turning angle of a cutting tool is adjustable to improve working efficiency depending on the shape of the cutting tool to make the best of the cutting performance of the cutting tool.

According to the present invention, there is provided a dental handpiece having a head in which a cutting tool is attached, a neck extending proximally from the head, and a grip connected to the neck at its distal end and to a drive unit at its proximal end, wherein said head contains rotary means for rotating the cutting tool, said neck contains a first rotary shaft extending therein, and said grip contains a second rotary shaft extending therein, wherein said rotary means, said first rotary shaft, and said second rotary shaft are operatively linked in this order to transmit driving force from the drive unit to the cutting tool, wherein said second rotary shaft has an input-side shaft part and an output-side shaft part, and reciprocal rotation means is interposed between said input-side shaft part and said output-side shaft part, said reciprocal rotation means comprising:
a spherical rotary body rotatable around a vertical axis, and supported between said input-side shaft part and said output-side shaft part, said rotary body having an input-side guide groove and an output-side guide groove in the form of vertical arcs extending in a surface of said rotary body on a single imaginary circle having its center at the center of the rotary body,
an input-side semispherical concave surface formed at an end of said input-side shaft part facing to the rotary body, and engageable with a proximal semispherical surface of the rotary body,
an input-side guide pin protruding from said input-side semispherical concave surface at an eccentric position, and extending toward the center of the rotary body at an angle, wherein said input-side guide pin engages in said input-side guide groove in the rotary body,
an output-side semispherical concave surface formed at an end of said output-side shaft part facing to the rotary body, and engageable with a distal semispherical surface of the rotary body, and
an output-side guide pin protruding from said output-side semispherical concave surface at an eccentric position, and extending toward the center of the rotary body at an angle, wherein said output-side guide pin engages in said output-side guide groove in the rotary body,
wherein a rotary motion provided by the drive unit to said input-side shaft part is converted to a reciprocating rotating motion by means of said rotary body, and transmitted to said rotary means via said output-side shaft part and the first rotary shaft to drive the cutting tool in a reciprocating rotating motion.

### BRIEF DESCRIPTION OF THE DRAWINGS

- Fig. 1: is a side sectional view of an embodiment of the dental handpiece according to the present invention.
- Fig. 2: is an exploded perspective view of the reciprocal rotation mechanism of the handpiece of Fig. 1.
- Fig. 3: is an enlarged sectional view of the main part of the reciprocal rotation mechanism arranged in the grip section of the handpiece of Fig. 1.
- Fig. 4: is a partial side sectional view of a conventional dental handpiece.

### PREFERRED EMBODIMENTS OF THE INVENTION

The present invention will now be explained in detail. As used herein, the term "reciprocal rotation" and its derivatives means a twisting motion around an axis for a predetermined turning angle, and the direction of rotation changes in turn between the forward and reverse directions.

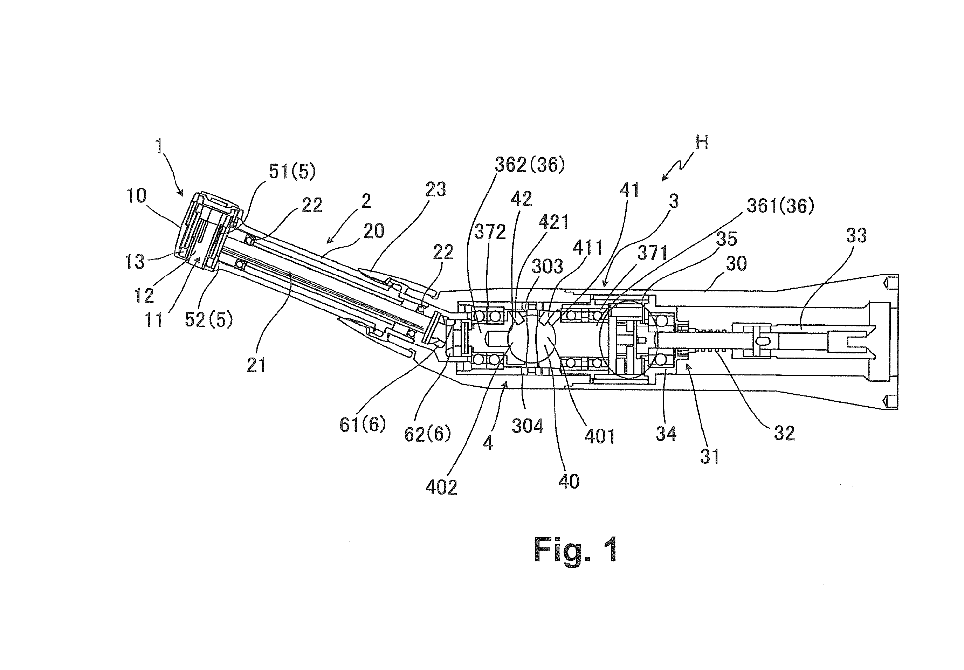

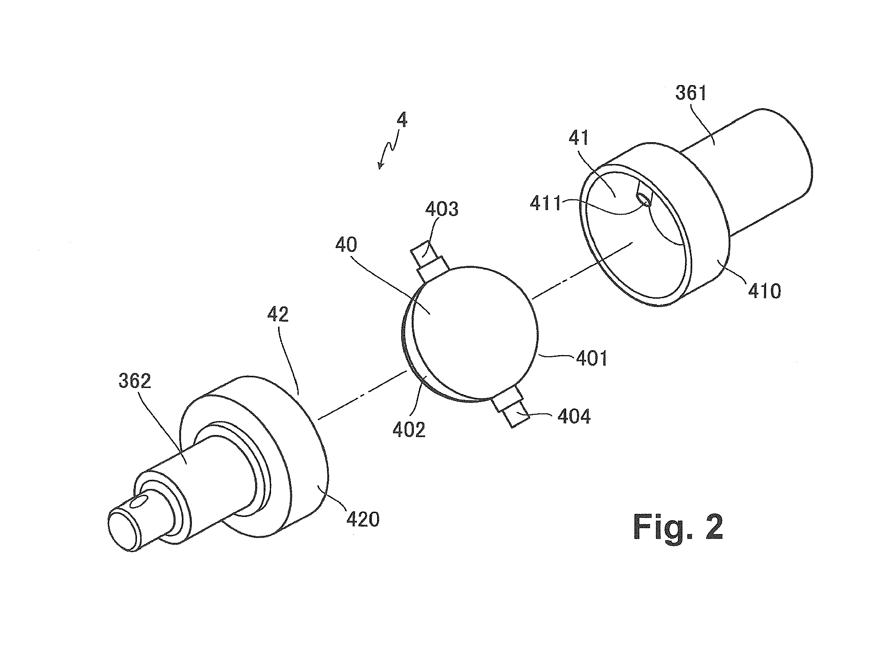

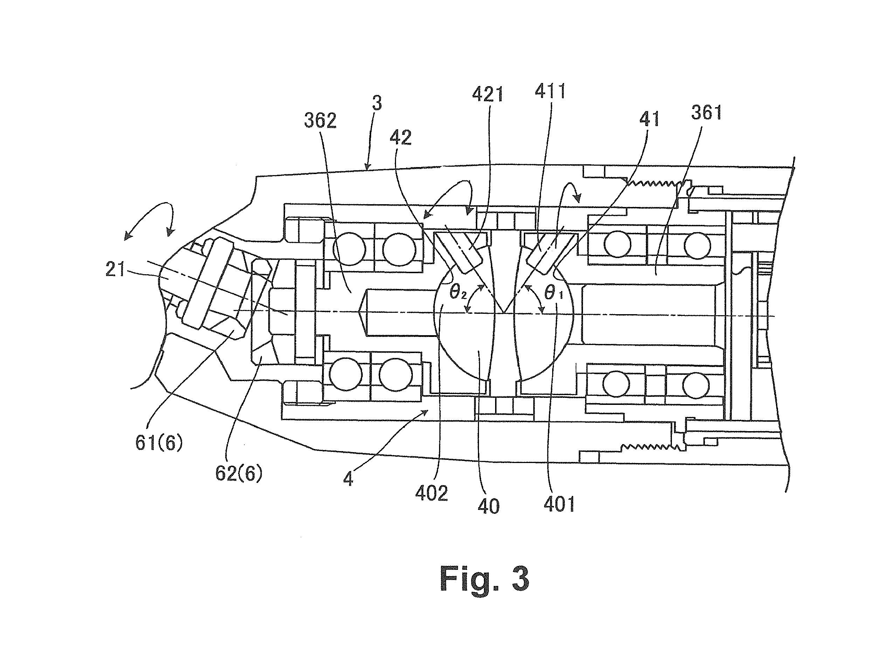

Fig. 1 shows the overall structure of dental handpiece H according to the present invention, and Figs. 2 and 3 show the main part structure of the handpiece H.

Referring to Fig. 1, the dental handpiece H is of a contra-angle type, and has head 1 in which a cutting tool (not shown) is attached, neck 2 extending proximally from the head 1, and grip 3 detachally connected to the neck 2 by means of connecting ring 23. The grip 3 is detachably connected to a drive unit (not shown) at its proximal end for receiving power to drive the cutting tool attached to the head 1.

The head 1 has head housing 10 in the form of a hollow cylinder, and rotary mechanism 11 disposed inside the head housing 10. The rotary mechanism 11 is composed of rotor 12 with a chuck mechanism (not shown in detail), and gear 51 integrally provided on the outer surface of the rotor 12. The rotor 12 is rotatably fixed in the head housing 10 via bearings 13.

The neck 2 has neck housing 20 in the form of a hollow cylinder which is formed integrally with and extending proximally from the head housing 10, and first rotary shaft 21 rotatably supported in the neck housing 20 via bearings 22. The rotary shaft 21 has gear 52 on one end which meshes with the gear 51 on the rotor 12 to together constitute power transmission means 5, and gear 61 on the other end which meshes with gear 62 provided on second rotary shaft 31 in the grip 3 as will be discussed later, to together constitute power transmission means 6.

The grip 3 has grip housing 30 in the form of a hollow cylinder, second rotary shaft 31 rotatably supported in the grip housing 30, and reciprocal rotation mechanism 4 assembled in the second rotary shaft 31. The second rotary shaft 31 is composed of coupling shaft 32 with coupling claw 33 provided proximally contiguous to the coupling shaft 32, and power transmission shaft 36.

The coupling shaft 32 is rotatably and coaxially supported in the proximal part of the grip housing 30 via bearing 34, and is operatively linked to decelerator 35 at its distal end, which decelerator 35 is fixed in the middle of the grip housing 30. The coupling claw 33 is operatively linked to a rotary drive section (motor) in the drive unit connected to the proximal end of the grip 3.

The power transmission shaft 36 is divided into two coaxially positioned parts, i.e., input-side shaft part 361 and output-side shaft part 362, so as to incorporate the reciprocal rotation mechanism 4 therebetween. The other end of the input-side shaft part 361 is operatively linked to the coupling shaft 31 via the decelerator 35, whereas the other end of the output-side shaft part 362 is operatively linked to the first rotary shaft 21 of the neck 2. The input- and output-side rotary shafts 361, 362 are rotatably and coaxially supported in the distal part of the grip housing 30 via bearings 371 and 372, respectively. The facing ends of the input- and output-side rotary shafts 361 and 362 are linked via the reciprocal rotation mechanism 4 as will be discussed later.

The output-side shaft part 362 is provided with gear 62 at one end opposite to the input-side shaft part 361. The gear 62 and the gear 61 on the first rotary shaft 21 in the neck 2 together form power transmission means 6, and operatively link the output-side shaft part 362 to the first rotary shaft 21. That is, the power transmission means 6 is interposed between the driving rotary shaft 31 and the driven rotary shaft 21, and amplifies or abates the turning angle in the reciprocating rotating motion of the output-side shaft part 362. The power transmission means 6 may either be of a contact type or a noncontact type.

Fig. 2 shows the reciprocal rotation mechanism 4 in detail. The reciprocal rotation mechanism 4 includes rotary body 40 of a generally spherical shape, input-side semispherical concave surface 41 formed at one end of the input-side shaft part 361, input-side guide pin 411 protruding from the input-side semispherical concave surface 41, output-side semispherical concave surface 42 formed at one end of the output-side shaft part 362, and output-side guide pin 421 protruding from the output-side semispherical concave surface 42.

The rotary body 40 has upper rotary shaft 403 and lower rotary shaft 404 each projecting outwards along the central vertical axis of the body 40, and input-side guide groove 401 and output-side guide groove 402 each extending in the surface of the rotary body 40 in the form of a vertical arc between the upper and lower rotary shafts 405 and 404. The input- and output-side guide grooves 401 and 402 are not necessarily formed all the way from the upper rotary shaft 403 to the lower rotary shaft 404, and may be spaced from each shaft 403, 404, as long as the two grooves 401 and 402 are on a single imaginary circle having its center at the center of the rotary body 40. The input- and output-side guide grooves 401 and 402 are arranged at diametrically opposite positions on the spherical surface of the rotary body 40. The upper and lower rotary shafts 403 and 404 are supported by upper and lower bearings 303 and 304, respectively, fixed in the grip housing 30, so that the rotary body 40 is held between the input- and output-side rotary shafts 361 and 362 rotatably around the central vertical axis, which extends at a right angle to the rotary axis of the second rotary shaft.

The input-side semispherical concave surface 41 is formed at one end of the input-side shaft part 361. More specifically, the input-side shaft part 361 has enlarged cylindrical part 410 with a larger diameter at one end facing to the rotary body 40, and the surface 41 is formed in the end face of this enlarged part 410. The surface 41 is engageable with the proximal half of the spherical surface of the rotary body 40. The input-side guide pin 411 protrudes from the surface 41 at an eccentric position near the periphery of the surface 41 and extends toward the center of the rotary body 40, when assembled, at an adjustable angle with respect to the axis of the input-side shaft part 361.

Similarly, the output-side semispherical concave surface 42 is formed at one end of the output-side shaft part 362. More specifically, the output-side shaft part 362 has enlarged cylindrical part 420 with a larger diameter at one end facing to the rotary body 40, and the surface 42 is formed in the end face of this enlarged part 420. The surface 42 is engageable with the distal half of the spherical surface of the rotary body 40. The output-side guide pin 421 protrudes from the surface 42 at an eccentric position near the periphery of the surface 42 and extends toward the center of the rotary body 40, when assembled, at an adjustable angle with respect to the axis of the output-side shaft part 362. The output-side guide pin 421 may be constantly biased toward its initial position by means of a spring or the like means for facilitating engagement and guiding of the guide pin 421 in the guide groove 402 as will be discussed later.

In operation, the rotary drive section in the drive unit is connected to the coupling claw 33 to rotate the coupling shaft 32, which rotates the input-side shaft part 361 of the second rotary shaft 31 via the decelerator 35. The rotary motion of the shaft part 361 is converted to a reciprocating rotating motion by means of the reciprocal rotation mechanism 4, and this reciprocating rotating motion is transmitted to the output-side shaft part 362, and then via the meshing gears 62 and 61, to the first rotary shaft 21. The reciprocal rotation of the shaft 21 is transmitted via the meshing gears 52 and 51 to the rotor 12 in the head 1 to give reciprocal rotating motion to the cutting tool.

Since the reciprocal rotation mechanism 4 is arranged in the grip 3, the guide grooves 401 and 402 of the rotary body 40 may be formed in any desired depth in the sphere of the rotary body 40. This allows enlargement of the angle ranges of the guide pins 411 and 421 with respect to the rotary axis of the input- and output-side rotary shafts 361 and 362, respectively, and the angles of the pins 411 and 421 may suitably be set depending on the desired turning angle of the cutting tool.

The angle of the output-side guide pin 421 may preferably be the same as or smaller than that of the input-side guide pin 411, for the operation of the reciprocal rotation mechanism 4. Referring to Fig. 3, angle θ1 of the input-side guide pin 411 with respect to the rotary axis of the input-side shaft part 361 and angle θ2 of the output-side guide pin 421 with respect to the rotary axis of the output-side shaft part 362 may preferably be θ1≈θ2 or θ1>θ2. In this figure, assuming that the optimal turning angle of the cutting tool to be used is within the range of 120° to 136°, angle θ1 of the input-side guide pin 411 is 60° and angle 02 of the output-side guide pin 421 is 55°.

When the input-side shaft part 361 is rotated in one direction, the input-side guide pin 411 revolves around the rotary axis of the input-side shaft part 361 in this direction. With the guide pin 411 engaging in and guiding the input-side guide groove 401, the rotary body 40 repeats the rotation for 60° in one direction and 60° in reverse and the rotation for 60° in the other direction and 60° in reverse. That is, the rotary motion of the input-side shaft part 361 is converted by the rotary body 40 to a reciprocating rotating motion, so that the rotary body 40 is reciprocally rotated over 120°, changing the rotational direction in turns. On the other hand, with the output-side guide pin 421 engaging in and guided by the output-side guide groove 402, the reciprocating rotating motion of the rotary body 40 makes the output-side guide pin 421 repeat the revolution for 55° in one direction and 55° in reverse and the revolution for 55° in the other direction and 55° in reverse around the rotary axis of the output-side shaft part 362. This makes the output-side shaft part 362 repeat the rotation for 55° in one direction and 55° in reverse and the rotation for 55° in the other direction and 55° in reverse. That is, the reciprocating rotating motion of the rotary body 40 is transmitted to the output-side shaft part 362, so that the shaft part 362 is reciprocally rotated over 110°, changing the rotational direction in turns.

This reciprocating rotating motion of the output-side rotary shaft is transmitted to the first rotary shaft 21 via the power transmission means 6 (gears 62 and 61), and then via the power transmission means 5 (gears 52 and 51) to the rotor 12 in the head 1.

In this embodiment, for setting a suitable turning angle for the cutting tool to be used, the two gears 61 and 62 of the power transmission means 6 have the numbers of teeth set at a ratio of 9:11, so that the turning angle of the output-side shaft part 362 is amplified to about 134° (110° x 11/9). Thus, in the dental handpiece H of the present invention, the turning angle in the reciprocating rotating motion of the output-side shaft part 362 is drastically increased to 110° compared to the conventional handpiece due to the reciprocal rotation mechanism 4 provided in the grip 3, and the turning angle is further amplified to about 134° by means of the power transmission means 6.

With the dental handpiece H of the present invention, the reciprocal rotation mechanism 4 is incorporated in the driving rotary shaft 31 in the grip 3, the guide grooves 401 and 402 may be formed in the spherical surface of the rotary body 40 in any desired depth, and the angles of the guide pins 411 and 421 are adjustable over a wider range depending on the turning angle of the cutting tool to be used. Thus, the turning angle of the cutting tool may be increased as much as practicable, for example, to 100° to 110°. The working efficiency with the cutting tool in various dental treatments is also improved to shorten the working time. The turning angle in the reciprocating rotating motion of the cutting tool may be adjusted depending on the shape of the cutting tool to improve the cutting efficiency and make the best of the cutting performance of the cutting tool.

In the dental handpiece H of the present invention, by setting the output-side guide pin 421 at the same angle as or a smaller angle than the input-side guide pin 411, the engagement and guiding of the input- and output-side guide pins 411, 421 in the guide grooves 401, 402, respectively, may be made smooth. Thus, a sequence of actions including conversion of the rotary motion of the input-side shaft part 361 to the reciprocating rotating motion of the rotary body 40 and transmission of this reciprocating rotating motion to the output-side shaft part 362, may be performed securely.

In the dental handpiece H of the present invention, with the power transmission means 6 interposed between the driving shaft 31 and the driven shaft 21, the turning angle of the output-side shaft part 362 may be amplified to various angles, i.e., about 120° to 135°, or abated. By combining the power transmission means 6 with the reciprocal rotation mechanism 4, working efficiency of a cutting tool in various dental treatments may further be improved to drastically shorten the working time. The turning angle of the cutting tool may be adjusted depending on the shape of the cutting tool to make the best of the cutting performance of the cutting tool.

In the above-described embodiment, the power transmission means 6 is composed of the gears 61 and 62, but may also be other contact-type power transmission means, such as rollers. In the case of rollers, the turning angle of the output-side rotary shaft may be amplified or abated by changing the ratio of the outer diameters of the rollers. The power transmission means 6 may alternatively be noncontact-type power transmission means, such as magnetic gears. In the case of magnetic gears, the turning angle of the output-side rotary shaft may be amplified or abated by changing the ratio of the numbers of the N- and S-poles.

## Claims

1. A dental handpiece having a head in which a cutting tool is attached, a neck extending proximally from the head, and a grip connected to the neck at its distal end and to a drive unit at its proximal end, wherein said head contains rotary means for rotating the cutting tool, said neck contains a first rotary shaft extending therein, and said grip contains a second rotary shaft extending therein, wherein said rotary means, said first rotary shaft, and said second rotary shaft are operatively linked in this order to transmit driving force from the drive unit to the cutting tool, wherein said second rotary shaft has an input-side shaft part and an output-side shaft part, and reciprocal rotation means is interposed between said input-side shaft part and said output-side shaft part, said reciprocal rotation means comprising:
a spherical rotary body rotatable around a vertical axis, and supported between said input-side shaft part and said output-side shaft part, said rotary body having an input-side guide groove and an output-side guide groove in the form of vertical arcs extending in a surface of said rotary body on a single imaginary circle having its center at the center of the rotary body,
an input-side semispherical concave surface formed at an end of said input-side shaft part facing to the rotary body, and engageable with a proximal half of the spherical surface of the rotary body,
an input-side guide pin protruding from said input-side semispherical concave surface at an eccentric position, and extending toward the center of the rotary body at an angle, wherein said input-side guide pin engages in said input-side guide groove in the rotary body,
an output-side semispherical concave surface formed at an end of said output-side shaft part facing to the rotary body, and engageable with a distal half of the spherical surface of the rotary body, and
an output-side guide pin protruding from said output-side semispherical concave surface at an eccentric position, and extending toward the center of the rotary body at an angle, wherein said output-side guide pin engages in said output-side guide groove in the rotary body,
wherein a rotary motion provided by the drive unit to said input-side shaft part is converted to a reciprocating rotating motion by means of said rotary body, and transmitted to said rotary means via said output-side shaft part and the first rotary shaft to drive the cutting tool in a reciprocating rotating motion.

2. The dental handpiece according to claim 1, wherein said angle of the input-side guide pin is adjustable with respect to a rotary axis of said input-side shaft part, and said angle of the output-side guide pin is adjustable with respect to a rotary axis of said output-side shaft part.

3. The dental handpiece according to claim 1, wherein said angle of the output-side guide pin is substantially the same as or smaller than said angle of the input-side guide pin.

4. The dental handpiece according to claim 1, further comprising power transmission means interposed between said first rotary shaft and said second rotary shaft.

5. The dental handpiece according to claim 4, wherein said power transmission means amplifies a turning angle of said output-side shaft part, and transmit an amplified turning angle to the first rotary shaft.

6. The dental handpiece according to claim 4, wherein said power transmission means abates a turning angle of said output-side shaft part, and transmit an abated turning angle to the first rotary shaft.

7. The dental handpiece according to claim 1, wherein said power transmission means is of a contact type.

8. The dental handpiece according to claim 1, wherein said power transmission means is of a noncontact type.
